Europäisches Patentamt

European Patent Office

Office européen des brevets

(11) Publication number: **0 256 138**
**B1**

(12) **EUROPEAN PATENT SPECIFICATION**

(45) Date of publication of patent specification: **27.06.90**

(21) Application number: **87901127.8**

(22) Date of filing: **09.02.87**

(86) International application number:
**PCT/JP87/00081**

(87) International publication number:
**WO 87/04729 13.08.87 Gazette 87/18**

(51) Int. Cl.⁵: **C 21 C 5/52,** F 27 D 13/00,
F 27 D 17/00

(54) **SYSTEM FOR SCRUBBING GAS USED FOR PREHEATING OF SCRAP FOR STEELMAKING.**

(30) Priority: **10.02.86 JP 27389/86**

(43) Date of publication of application:
**24.02.88 Bulletin 88/08**

(45) Publication of the grant of the patent:
**27.06.90 Bulletin 90/26**

(84) Designated Contracting States:
**DE FR GB**

(56) References cited:
**GB-A-2 110 353**
**GB-A-2 162 293**
**JP-A-5 752 791**
**JP-A-5 969 687**
**JP-A-6 129 685**
**JP-A-6 129 686**
**JP-Y-5 922 480**
**US-A-4 492 567**

(73) Proprietor: **GODO STEEL, LTD.**
**3-24, Umeda 2-chome Kita-ku**
**Osaka-shi Osaka 530 (JP)**

(72) Inventor: **MATSUTANI, Yoshio**
**732-1, Soone Yamatotakada-shi**
**Nara 635 (JP)**
Inventor: **HIROSE, Hiroshi**
**454-8, Iida Himeji-shi**
**Hyogo 670 (JP)**

(74) Representative: **Puschmann, Heinz H. et al**
**Spott und Puschmann Patentanwälte**
**Sendlinger-Tor-Platz 11**
**D-8000 München 2 (DE)**

Courier Press, Leamington Spa, England.

## Description

This invention relates to a purification system of exhaust gas after preheating scrap for steelmaking, and more particularly, to a system to preheat scrap using energy recovered from exhaust gas from an electric furnace that melts the scrap, and to realize a processing for removal of odor perfectly from exhaust gas as well as a procesing for anti-pollution of waste water containing concentrated malodorous substances and precipitator draining containing oil mist.

Background art

The exhaust gas generated in the operation of an electric steelmaking furnace contains a large quantity of dust and recoverable thermal energy, or heat. This exhaust gas can be used to preheat scrap that is to be charged into the electric furnace, saving both time and electric power required for melting the steel. However, oil, paint, rubber or plastic are often attached to or mixed in with the steel scrap, and heating them generates malodorous gases and fumes. Typically, the temperature of the exhaust gas drops by about 100°C to 300°C as it provides heat to the scrap being preheated. Hence exhaust gas temperature reaching the scrap has to be in the range of 650°C to 700°C which is necessary to decompose the above mentioned organic matter in the scrap. Failure to so decompose such pollutants results in the release of malodorous effluents into the atmosphere, causing unacceptable environmental pollution.

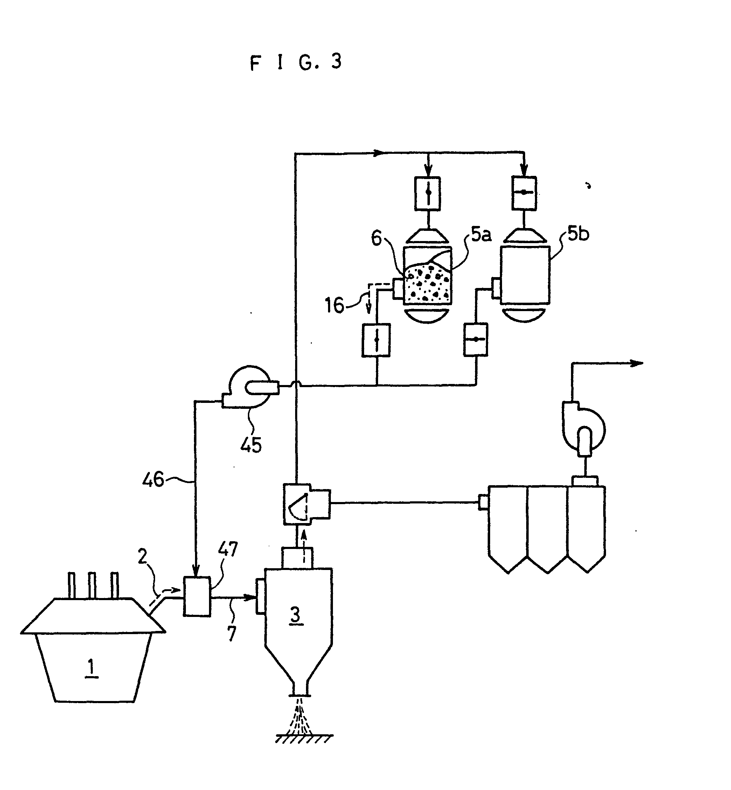

A scrap preheating system like the one shown in Fig. 3 has been used to remove odors from furnace exhaust gas after preheating of scrap in order to prevent environmental air pollution. Such a system typically comprises a combustion apparatus 3, wherein combustibles such as carbon monoxide, which are present in the dusty exhaust gas from furnace 1 are burned. This eliminates such constituents from the exhaust gas and heats it. Thereafter, some of this exhaust gas is introduced at a high temperature to a scrap preheater, such as 5a or 5b, so that some of the heat energy from the exhaust gas may be utilized to preheat the scrap therein. An induced draft fan 45 then returns the somewhat cooled gas 16, after it has heated the scrap, through circulation duct 46 to a gas feeding box 47 provided upstream of the combustion apparatus 3 so that this gas may be mixed, precisely gas-and-gas mixed, therein with dusty, high temperature exhaust gas from the electric furnace 1. Malodorous substances picked up from the preheated scrap are thereafter burned in combustion chamber 3 together with the combustibles, thus obtaining deodorization of the finally released exhaust gas.

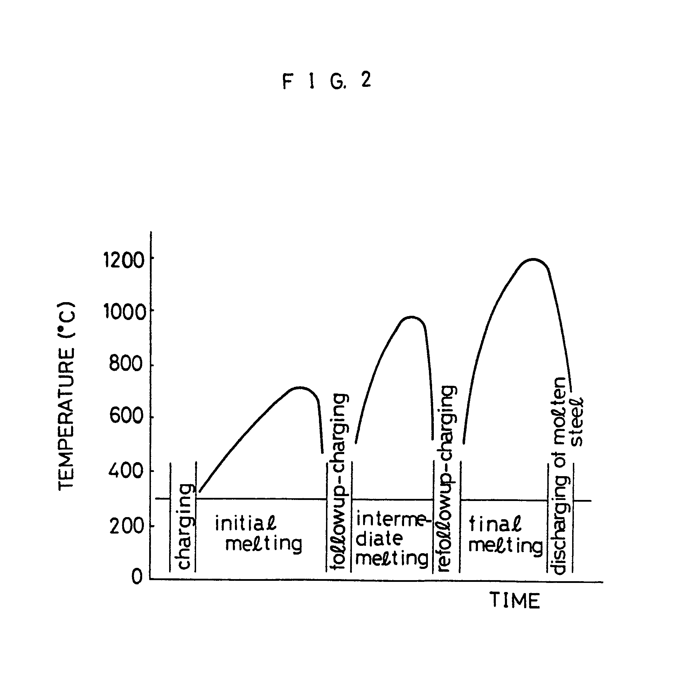

As indicated in Fig. 2, the temperature of the exhaust gas from the electric furnace, however, depends on the relatively low temperature that prevails during the initial melting of the scrap after charging up of the furnace, a temperature drop by air mixture under follow up-charging, a higher temperature level during the intermediate melting thereafter, a temperature drop under refollow-up-charging, and an even higher temperature during the final melt thereafter. The temperature of exhaust gas from the furnace varies in the range of 400°C to 1200°C. As a result, for the period during which the temperature of the exhaust gas is at the lower end of this range, the temperature in the combustion apparatus cannot be kept at 650°C or higher, i.e., hot enough to deodorize the gas. In addition, since the gas in the combustion apparatus is reintroduced into the scrap preheater, much of the exhaust gas recirculates between the combustion apparatus and the scrap preheater, and this significantly decreases utilization of the available heat in the exhaust gas. In other words, since all the gas after preheating scrap is recirculated into the combustion apparatus in order to deodorize it, the heat energy of the exhaust gas as it comes from the electric furnace is not optimally used for preheating scrap. This eventually results in the release of malodorous effluents and lowers the overall efficiency in operating the system.

It was long believed that the gas preheating scrap could not be deodorized without the offensive constituents actually being burned. However, it has been confirmed by research leading to the present invention that the unpleasant odor generated by scrap preheaters is caused not only by ordinarily encountered malodorous substances other than oil but also by oil mist generated from cutting or lubricating oil that are present and mixed in with cutting scrap, etc., and that such materials have interaction effects that aggravate the malodorousness of each separate pollutant. From this viewpoint, in order to deodorize the gas after preheating scrap, it is necessary not only to remove the ordinarily encountered maladorous substances but also to separate out and collect the oil mist before released into the atomsphere. The above-mentioned system applied to the practical system has been realized by the applicant.

The practical system produced good results that can deodorize the gas after preheating even in a low temperature of exhaust gas from electric steelmaking furnace. The large portion of aqueous solution used in a gas scrubber for removal of malodorous substances, and the large portion of washings used in a wet-type electric precipitator for removal of oil mist, circulate in the system respectively. Accordingly the amount of aqueous solution and precipitator drainage discharged out of the system is only about 10 l per 1 ton of scrap. Repetition of using it, however, makes it COD, chemical oxygen demand, get very high as 4,000~5,000. Even if the waste water is released, as it is fluid, does not diffuse into the atmosphere. Ordinarily the waste water is released into a slag garbage, for instance, in a factory. When the waste water must be released out a factory, however, it causes environmental pollution, therefore, water treatment equipment for anti-pollution measures is necessary in a factory. As a result of it, a practical use of scrap preheating system is difficult as a rise of running cost (GB—A—2 162 293).

It is an object of this invention to provide a system for cleanly preheating scrap for steelmaking in an electric furnace, which makes optimum use of the available heat from the furnace exhaust gas and removes particulate and malodorous constituents from the exhaust gas after preheating of the scrap, moreover, realizes to remove water pollutants from the system waste water, consists of waste water from a gas scrubber and precipitator drainage, thereby reducing environmental and air pollution to acceptable levels for an electric steelmaking operation.

Disclosure of invention

A purification apparatus for an assembly for preheating of contaminated scrap to be used in steelmaking according to this invention, employing exclusively heat from exhaust gas flow carrying duct and unburned combustibles from an electric steel making furnace comprises; combustion means for burning combustibles present in the exhaust gas flow, being shaped for separating out a portion of dust particles from said exhaust gas flow comtemporaneously with said burning of said combustibles; scrap preheating means for preheating scrap to be charged into said electric furnace by transfer thereto of heat energy from a predetermined portion of said exhaust gas flow conveyed from said combustion means; dust collector means for collecting dust from said exhaust gas flow after preheating of scrap in said scrap preheating means; gas scrubber means for scrubbing malodorous substances generated by contaminants in preheating of said scrap from said exhaust gas flow, wherein said exhaust gas flow is scrubbed with a flow of an aqueous solution of deodorant solvent, and so as to generate saturated water vapor from said solvent flow; wet-type electric precipitator means for collecting residual dust particles and said saturated water vapor and oil mist attached to said saturated water vapor and liquid droplets in said exhaust gas flow; and: introducing means for supplying waste water containing malodorous substances from said gas scrubber means and precipitator drainage containing oil mist collected by said wet-type electric precipitator means into said exhaust gas flow from electric steelmaking furnace under control of a leveler of a flow rate adjusting tank.

Consequently, waste water containing concentrated malodorous substances and precipitator drainage containing a large quantity of oil mist are heated by electric steelmaking furnace gas to general water vapor, thereupon enable burning by electric steelmaking furnace gas. Thus deodorization of exhaust gas after preheating of scrap and anti-pollution of waste water and precipitator drainage can be achieved.

Brief description of drawings

Fig. 1 is a systemic diagram of the scrap preheating and exhaust gas purification apparatus of the present invention.

Fig. 2 is a graph detecting the variation of the temperature of the exhaust gas at different times in the operation of a multiply-charged electric steelmaking furnace.

Fig. 3 is a systemic diagram of a scrap preheating apparatus known in the prior art, which utilizes the exhaust gas from an electric steelmaking furnace to preheat scrap thereof.

Best mode for carrying out the invention

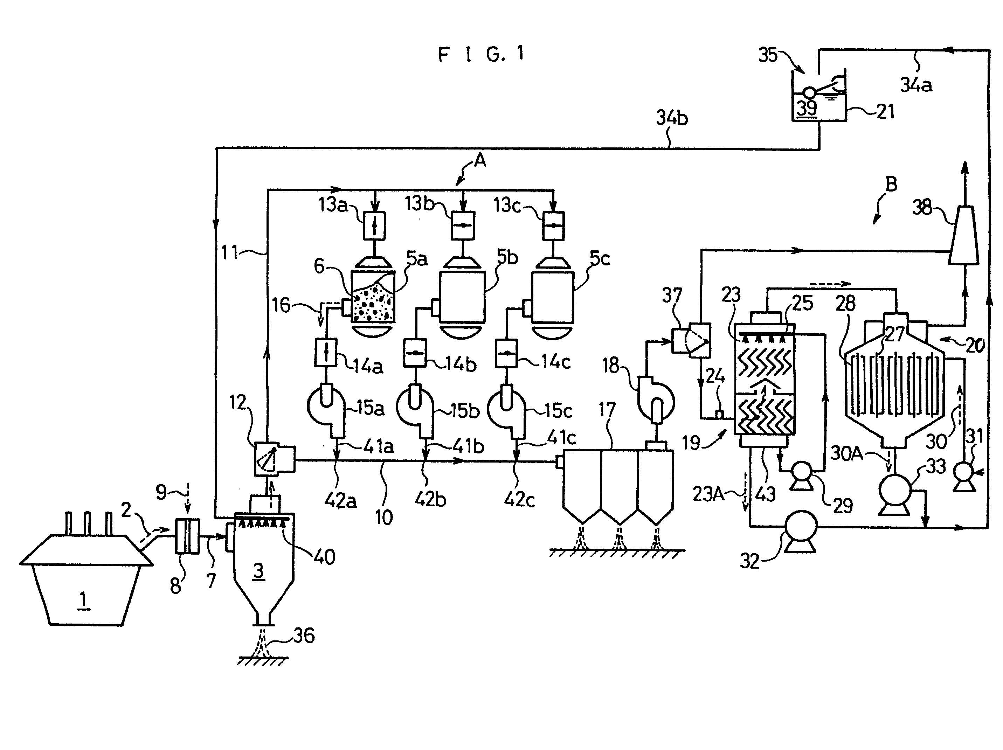

Referring to Fig. 1, an electric steelmaking system provides preheating system A for preheating scrap by electric steelmaking furnace gas and a purification system B of exhaust gas. High temperature exhaust gas containing entrained dust, generated during the operation of an electric steelmaking furnace 1, is burned in a combustion apparatus 3 so that all combustible constituents in the exhaust gas are oxidized, i.e., burned, releasing more heat. The exhaust gas thereafter, in whole or in part, is supplied to scrap preheaters such as 5a, 5b and 5c, so that the thermal energy or heat in the exhaust gas is utilized to raise the temperature of the scrap that is to be charged into the electric steelmaking furnace 1. Exhaust gas duct 7, into which the gas from the electric steelmaking furnace 1 is conveyed, is connected to a gas outlet at the wall or ceiling of electric furnace 1, and is provided downstream thereof with a gap adjusting ring 8 and the combustion apparatus 3, in that sequence. A suitable quantity of fresh air is inhaled through the gap adjusting ring 8 to burn combustibles, e.g., CO, present in the exhaust gas and is fed through the combustion apparatus 3 mixed in with the dusty, high-temperature exhaust gas from electric furnace 1.

Combustion apparatus 3 is constructed to enable mixing of the dusty, high temperature exhaust gas with the fresh air taken in at adjusting ring 8, for effective burning of the combustible constituents, e.g., CO, present in the exhaust gas. Combustion apparatus 3 is also shaped and designed to effectively separate out and collect most of the larger, relatively dense, particulate matter and dust from the exhaust gas passing therethrough.

The upper portion of combustion apparatus 3 is connected to sub-duct 11 provided with valve 12, and bypasses the main duct 10 which is directly connected to dust collector 17 to enable feeding the gas through scrap preheaters 5a, 5b and 5c, after partial or complete combustion of the combustible constituents.

The scrap preheating means comprises one or more scrap preheaters, such as 5a, 5b and 5c, disposed in series or in parallel as shown in Fig. 1, each connected to the sub-duct 11 through valves 13a, 13b and 13c respectively.

Valves 14a, 14b and 14c connect scrap preheaters 5a, 5b and 5c to booster fans 15a, 15b and 15c respectively, provided at exhaust ducts 41a, 41b and 41c downstream of the preheaters, so that the exhaust gas with its malodorous constituents and oil mist may be conveyed through ducts 41a, 41b and 41c into the main exhaust duct 10. Naturally, by appropriate closure of valves, one or more of the scrap preheaters 5a, 5b and 5c may be used simultaneously.

Downstream of the confluences 42a, 42b and 42c, of main duct 10 and exhaust ducts 41a, 41b and 41c respectively, is provided a dry-type dust collector 17, such as a bag filter, for collecting the residual dust from the mixture of the gas from the combustion apparatus 3 and the gas from the scrap preheaters 5a, 5b and 5c, and downstream thereof, an induced draft fan 18 to facilitate the gas flow.

Purification equipment B is provided with gas scrubber 19, wet-type electric precipitator 20, flow rate adjusting tank 21 and sprinkler 40, as after mentioned. Downstream of induced draft fan 18 are sequentially disposed gas scrubber 19 and wet-type electric precipitator 20, for the removal of malodorous substances and the collection of oil mist present in the gas after preheating of scrap. Gas scrubber 19 regulates the gas temperature, removes malodorous substances from the exhaust gas and generates a large quantity of saturated water vapor by evaporation of part of the deodorant solvent solution mingling with and heated by the hot exhaust gas. A wet-type electric precipitator 20 collects oil mist, i.e., very fine oil droplets, that attach themselves to the saturated water vapor and any liquid droplets of the deodorant solution or condensed vapor carried with the exhaust gas.

One or more of gas scrubber 19 may be used as necessary, and each have a circulation pump 29 to circulate the aqueous solution of deodorant solvent therein. Circulating pump 29 feeds an aqueous solution of deodorant solvent from tank 43 through gas scrubber 19. The deodorant solvent may be a detergent having a high affinity for the malodorous substances present, a solvent into which ozone is blown, or a neutralizer of acid such as an alkali group chemical, preferably sodium hydroxide or sodium carbonate, in a solution having a pH 8 or higher. The flow rate of deodorant solvent into each gas scrubber is adjusted in response to the inlet gas temperature detected, for example, by a temperature sensor 24 at a gas inlet of gas scrubber 19. The deodorant solvent is released inside the scrubber chamber through sprinkler 25 respectively, as fine mist or spray to mix intimately with the exhaust gas flowing thereby.

The wet-type electric precipitator 20 collects the fine oil mist suspended in the flowing exhaust gas. As indicated in Fig. 1, it is provided with a water pump 31 for supplying washings to flush the electrode surfaces to which the collected oil mist clings. The precipitator 20 comprises a plurality of discharge electrodes 27, and preferably cylindrically shaped, corresponding collecting electrodes 28 so that the corona discharge of electricity between them generates positive and negative ions in close proximity to discharge electrodes 27. The negative ions negatively charge the saturated water vapor and any solution or condensate droplets present. The very fine droplets of oil in the oil mist present are attracted to and attach themselves to the charged vapor and solution or condensate droplets. As a result, the wet vapor and oil mist are attracted by electrostatic force towards collecting electrode 28, whereby the oil mist, saturated vapor and solution or condensate droplets are collected on the surface of electrodes 28. A gas inlet and a gas outlet are respectively provided adjacent to the top of the body so that the exhaust gas passes through the cylinders of the collecting electrodes 28 and out through a gas outlet. Washings from a tank, not shown, is periodically passed over the surfaces of collecting electrodes 28 to wash away collected oil mist therefrom and to discharge through the lower opening out of precipitator 20.

Above mentioned gas scrubber 19 and the wet-type electric precipitator 20 provide the pump 29 for circulating an aqueous solution 23, the pump 31 for supplying the washings 30 to flush the surface of collecting electrodes 28, and the pump 32, 33 for conveying the waste water 23A and precipitator drainage 30A to the flow adjusting tank 21.

The flow rate adjusting tank 21 induces the waste water 23A with malodorous substances and the precipitator drainage 30A with oil mist, into the electric steelmaking gas 2 at the upstream of scrap preheater 5a, 5b and 5c. This flow rate adjusting tank 21 is connected to the lead pipe 34a introducing the waste water 23A of which COD has become high during the repitition of using the waste water in the gas scrubber 19, and the precipitator drainage 30A from the wet-type electric precipitator 20. The flow rate adjusting tank 21 provides the leveler 35 for keeping the settled of flow rate and adjusts the flow rate from the pump 32 and 33 in response to the level of waste water detected by the leveler 35. The lead pipe 34b for supplying the system waste water consists of the stored waste water 23A and the precipitator drainage 30A into the combustion apparatus 3, is connected at the bottom of the tank 21. Besides, the flow rate adjusting tank 21 may control regularly the quantity of flow rate to be charged into the combustion apparatus 3, or adjust the proper quantity in response to the temperature in combustion apparatus 3.

The scrap preheating system A provides the preheating system and the purification system B of exhaust gas after preheating have been described above is operated as follows:

Referring to Fig. 1, the scrap preheated in scrap preheaters 5a, 5b and 5c is charged into electric furnace 1 and is melted and refined therein. In such refining, the scrap is charged in lots, one after another, in order to raise the melt temperature as indicated in Fig. 2. The dusty, high temperature exhaust gas 2 generated thereby is conveyed through exhaust gas duct 7 from electric furnace 1, and any combustibles included in the exhaust gas, e.g., CO, are completely burned in combustion apparatus 3 in mixture with fresh air 9 inhaled through the gas adjusting ring 8. Simultaneously, most of the larger particulate matter 36 in the exhaust gas is collected and removed from the bottom of the combustion apparatus.

When scrap preheating is not required, valve 12 takes its position as indicated by the one-dotted chain line so as to convey all of the exhaust gas to the main duct 10. The exhaust gas from the combustion apparatus 3 is drawn through dust collector 17 by induced draft fan 18, the dust is collected in dust collector 17 and the gas thereafter is released into the atomsphere by the exhaust stack 38 through valve 37. Since the high temperature exhaust gas from electric furnace 1 is completely burned in the combustion apparatus 3, the finally exhausted gas is significantly free of dust and malodorous constituents. When the scrap, e.g., cutting scrap, pig iron, rolling scrap or iron scrap, or the like, is preheated in preheater 5a by the thermal energy of the exhaust gas generated during the operation of electric furnace 1, valve 12 takes a middle position as indicated by the solid line, and booster fan 15a is actuated. A flow of exhaust gas corresponding to the suction provided by booster fan 15a is induced from combustion apparatus 3 via sub-duct 11, the remainder of the exhaust gas from electric furnace 1 going directly into dust collector 17 through main duct 10. The exhaust gas conveyed directly into dust collector is mixed at a confluence point with the exhaust gas that has picked up malodorous contaminants in preheater 5a, where it has also experienced a temperature drop of between 100°C and 300°C, while preheating charged scrap. The dust in the mixed exhaust gas is collected by dust collector 17. The mixed exhaust gas at this point is still accompanied malodorous constituents so that it cannot be dispersed from an exhaust stack 38, and it is therefore conveyed to gas scrubber 19 through valve 37.

In gas scrubber 19 a flow of deodorant solvent in aqueous solution, at a rate adjusted to correspond to the gas temperature at its inlet, is circulated so that at the temperature of the mixed exhaust gas mey drop down by, for example, 80°C, while generating saturated water vapor from the deodorizing solution. The deodorant solution may also be kept at a high temperature and a complete removal of malodorous constituents from the exhaust gas, even when the temperature of the gas from electric furnace 1 during excessive charges varies as indicated in Fig. 2. A neutralizer in the deodorant solvent, by chemical action, carries out the removal of malodorous substances uniformly and continuously under regulated deodorizing conditions. The heat in the exhaust gas passing through the scrubber maintains the temperature therein so that the deodorant solvent, and hence the water in the solvent solution evaporating to generate saturated vapor, flows in a fairly constant supply rate therethrough. The oil mist composed of fine oil droplets is not removed by the above-mentioned chemical action of the solvent, but rather it accompanies or attaches to the saturated water vapor and fine liquid droplets present in the wet vapor and so remains suspended in the exhaust gas which leaves the scrubber.

The exhaust gas after the removal of malodorous substances is conveyed, together with wet water vapor attaching oil mist, into the wet-type electric precipitator 20, in which a high negative voltage is applied to the discharge electrodes 27 while the collecting electrodes 28 are grounded to cause a strong electrostatic field to be generated around discharge electrodes 27. A corona discharge thus occurs, whereby positive and negative ions are generated in close proximity to the discharge electrodes 27. The positive ions are immediately neutralized at negative ions meanwhile charge the wet water vapor, condensate and solution droplets negatively while it passes through the electric field. Hence, oil mist is collected together with the attached water vapor, condensate and solution droplets at collecting electrodes 28. The electrically charged saturated vapor was generated at the stage preceding the electric precipitator 20 for attaching to the fine oil mist. The speed with which such charged particles moved toward the electrode increases with the applied electrostatic voltage, and provides a high operational efficiency of the system. The cleaned exhaust gas, free of dust and substantially free of malodorous constituents, is dispersed into the atmosphere through the exhaust stack 38, and the collected oil mist is separately processed.

The above description is applicable to a case where the exhaust gas introduced directly into dust collector 17 is mixed with an exhaust gas flow that has picked up dust and malodorous pollutants from preheated scrap, e.g., at the confluences 42a, 42b and 42c. Alternatively, when valve 12 takes its position as indicated by the broken line, the entire flow of exhaust gas from combustion apparatus 3 will be conveyed to the scrap preheaters 5a, 5b and 5c. In this case as well, the deodorization of malodorous gas constituents and the collection of oil mist from the exhaust gas are accomplished exactly as described above, and a larger amount of heat energy of the exhaust gas is utilized in order to preheat the scrap.

An aqueous solution 23 is used repeatedly in gas scrubber 19, a large amount of malodorous substances are picked up therein. The substances generated by chemical action may be solidified or may be liquid. Since the COD of waste water 23A containing concentrated malodorous substances is very high, waste water 23A cannot be allowed to flow into rivers and sewers. On the other, precipitator draining removed from the wet-type electric precipitator 20 contains a large amount of oil mist, similarly cannot be flowed.

Such system waste water and drainage are conveyed into the lead pipe 34a by the pump 32 and 33 respectively. The amount of waste water 39 supplied into the combustion apparatus 3 is adjusted by the flow rate adjusting tank 21 to sprinkle from the sprinkler 40 through the lead pipe 34b. The electric steelmaking furnace gas 2 is introduced at all time into combustion apparatus 3, contacts directly with the waste water sprinkled to generate water vapor. In addition to the wet water vapor generated from the waste water and drainage from precipitator, the vapor of malodorous substances and oil mist, are contained therein. An amount of generation of these vapors and water vapor caused malodorousness varies in response to the temperature of electric steelmaking furnace gas 2. Namely, the amount of vapor and water vapor will decrease when the temperature of the electric steelmaking furnace gas 2 is low, and the amount of vapor and water vapor will increase when the temperature of furnace gas 2 is high. In one cycle of the operation, accordingly, even if the temperature varies as indicated in Fig. 2, the amount of generation of vapor will be settled of itself in response to the temperature of furnace gas 2 respectively. The vapor and water vapor generated in this way is burnt in combustion apparatus 3. In initial operation when the electric steelmaking furnace gas 2 does not have enough temperature to burn the vapor, however, waste water 39 is stopped introducing into combustion apparatus 3. Incidentally, the amount of waste water 39 introduced into combustion apparatus 3 is remarkably less than the amount of electric steelmaking furnace gas 2 drawn through exhaust duct 7, and the ratio of flow quantity in the mixture of waste water vapor and exhaust gas is specially less than that of the gas and gas mixture mentioned in the Background Art. Accordingly, it necessitates very few energy of exhaust gas in combustion apparatus 3 to be used for deodorizing, the temperature of exhaust gas conveyed to the scrap preheater does not remarkably fall. To take a definite instance, in the circumstances of 80 ton steelmaking furnace, 10,000,000 Kcal (11,163 · 10^6 Wh) energy of exhaust gas is generated in one cycle. The system waste water, on the other, is 800 Kg generated. It necessitates about 400,000 Kcal (465 200 Wh) energy to evaporize the system waste water. This value corresponds to only 45% of all energy of the exhaust gas, therefore, using a very small portion of the exhaust gas is sufficient to evaporize the system waste water. The amount of heat energy used in combustion apparatus 3 is too little to be considered.

In the practical example mentioned above, the waste water containing malodorous substances and the collected drainage containing oil mist are conveyed into the combustion apparatus connected to the exhaust gas duct, however, may be conveyed to the exhaust gas duct connected to the combustion apparatus, since it is satisfied that the system waste water can be burnt by the electric steelmaking furnace gas before used for scrap preheating. In that case, the system waste water is burnt only in the exhaust gas duct. In another case, the vapor of malodorous substances and oil mist resulted from the evaporation of waste water in the exhaust gas duct, is burnt more effectively in the combustion apparatus which has become high temperature by burning of combustibles containing exhaust gas.

Industrial applicability

This invention is useful in a processing for removal of malodorous substances in exhaust gas and in a processing for anti-pollution of waste water, and is suitable for the case where the scrap which oil, paint, rubber or plastic are often attached to or mixed in, is preheated and refined in electric furnace.

**Claims**

1. Purification apparatus for an assembly for preheating of contaminated scrap (6) to be used in steelmaking, employing exclusively heat from exhaust gas flow (2) carrying dust and unburned combustibles from an electric steelmaking furnace (1), comprising combustion means (3) for burning combustibles present in said exhaust gas flow, being shaped for separating out a portion of dust particles from said exhaust gas flow contemporaneously with said burning of said combustibles, scrap preheating means (5a, 5b, 5c) for preheating scrap (6) to be charged into said electric furnace (1) by transfer thereto of heat energy from a predetermined portion of said exhaust gas flow conveyed from said combustion means (3), dust collector means (17) for collecting dust from said exhaust gas flow after preheating of scrap (6) in said scrap preheating means, gas scrubber means (19) for scrubbing malodorous substances generated by contaminants in preheating of said scrap (6) from said exhaust gas flow, wherein said exhaust gas flow is scrubbed with a flow of an aqueous solution (23) of deodorant solvent, and so as to generate saturated water vapor from said solvent flow, wet-type electric precipitator means (20) for collecting residual dust particles and said saturated water vapor and oil mist attached to said saturated water vapor and liquid droplets in said exhaust gas flow, characterized by introducing means (32, 33) for supplying waste water (23A) containing malodorous substances from said gas scrubber means (19) and precipitator drainage (30A) containing oil mist collected by said wet-type electric precipitator means (20) into said exhaust gas flow (2) from electric steelmaking furnace under control of a leveler (35) of a flow rate adjusting tank (21).

2. A purification apparatus of exhaust gas after preheating scrap for steelmaking, as set forth in claim 1, wherein said introducing means is for supplying said waste water (23A) and precipitator drainage (30A) into said combustion means (3).

3. A purification apparatus of exhaust gas after preheating scrap for steelmaking as ser forth in claim 1, wherein said introducing means is for supplying said waste water (23A) and precipitator drainage (30A) into an exhaust gas duct (7), whereinto an electric steelmaking furnace gas (2) is drawn.

4. A purification apparatus of exhaust gas after preheating scrap for steelmaking, as set forth in claim 1, wherein said introducing means comprises a flow rate adjusting tank (21) for adjustment of the total supply of said waste water (23A) and precipitator drainage (30A).

5. A purification apparatus of exhaust gas after preheating scrap for steelmaking, as set forth in claim 1, wherin said introducing means comprises a sprinkler (40) to sprinkle said waste water (23A) and precipitator drainage (30A) into electric steelmaking furnace gas.

## Patentansprüche

1. Reinigungsgerät für eine Einrichtung zur Vorwärmung von verunreinigtem Schrott (6) als Einsatzstoff für die Stahlerzeugung unter ausschließlicher Verwendung von Abgaswärme aus einem Staub und unverbrannte Brennstoffteile enthaltenden Abgasstrom eines Elektroofens für die Strahlerzeugung (1), mit einer Verbrennungseinrichtung (3) zum Verbrennen des Brennstoffanteils im Abgasstrom bei gleichzeitiger Ausfilterung eines Teils der im Abgasstrom enthaltenen Staubpartikel, mit einer Einrichtung (5a, 5b, 5c) zum Vorwärmen der Schrottbeschickung des Elektroofens (1) durch Zufuhr von Wärmeenergie aus einem vorbestimmten Teil des Abgasstroms aus der Verbrennungseinrichtung (3), mit einem Abscheider (17) für im Abgasstrom nach der Vorwärmung des Schrotts (6) enthaltene Staubpartikel, mit einer Gaswascheinrichtung (19) zum Auswaschen von Geruchsstoffen aus dem Abgasstrom, die durch die Verunreinigung des Schrotts bei seiner Vorwärmung freigesetzt wurden, wobei der Abgasstrom mit einer wässrigen Lösung (23) eines Deodorants gewaschen wird, derart, daß aus dem Lösungsmittel gesättigter Wasserdampf entsteht, mit einem elektrischen Naßfilter (29) zum Abscheiden noch vorhandener Staubpartikel und gesättigtem Wasserdampf sowie Ölnebel in dem gesättigten Wasserdampf und den Flüssigkeigströpfchen im Abgasstrom, dadurch gekennzeichnet, daß Mittel (32, 33) vorgesehen sind, die Geruchsstoffe aus der Gewaschanlage (19) und Niederschlagsdrain aus dem von elektrischen Naßfilter (20) abgeschiedenen Ölnebel enthaltendes Brauchwasser dem Abgasstrom (2) des Elektroofens dür die Stahlerzeugung unter der Steuerung eines Niveau-Controllers (35) in einem Ausgleichstank (21) zuführen.

2. Reinigungsgerät für einen Angasstrom nach Anspruch 1, dadurch gekennzeichnet, daß der Verbrennungseinrichtung (3) Brauchwasser (23A) und Niederschlagsdrain zugeführt wird.

3. Reinigungsgerät für einen Abgasstrom nach Anspruch 1, dadurch gekennzeichnet, daß das Brauchwasser (23A) und der Niederschlagsdrain (10A) einem Abgaskanal (7) zugeführt werden, der von Gas aus einem Elektroofen für die Stahlerzeugung durchströmt ist.

4. Reinigungsgerät für einen Abgasstrom nach Anspruch 1, dadurch gekennzeichnet, daß ein Ausgleichstank (21) für die kontrollierte Zuführung von Brauchwasser (23A) und Niederschlagsdrain vorgesehen ist.

5. Reinigungsgerät für einen Abgasstrom nach Anspruch 1, dadurch gekennzeichnet, daß die Zuführeinrichtung einen Sprinkler (40) zur direkten Verteilung des Brauchwassers (23A) und des Niederschlagsdrain in den Abgasstrom eines Elektroofens für die Stahlerzeugung beinhaltet.

## Revendications

1. Installation de purification pour un ensemble de préchauffage de ferrailles (6) polluées, destinée à être utilisée dans une aciérie, employant exclusivement de la chaleur provenant d'un courant de gaz brûlés (2), entraînant de la poussière et des combustibles non brûlés et provenant d'un four électrique (1) d'aciérie, comprenant des moyens de combustion (3) pour brûlér les matières combustibles présentes dand le courant de gaz brûlés, conformés de manière à séparer une partie des particules de poussières du courant des gaz brûlés, tout en brûlant ces matières combustibles, des moyens de préchauffage des ferrailles (5a, 5b, 5c) destinés à préchauffer la ferraille (6) à charger dans le four électrique (1) en y transférant de l'énergie calorifique provenant d'une partie déterminée à l'avance du courant de gaz brûlés issus des moyens de combustion (3), des moyens collecteurs de poussières (17) destinés à collecter la poussière du courant de gaz brûlés après le préchauffage des ferrailles (6) par les moyens de préchauffage des ferrailles, des moyens de lavage de gaz (19) destinés à enlever par lavage du courant de gaz brûlés des substances malodorantes engendrées par des agents polluants, lors du préchauffage des ferrailles (6), le courant de gaz brûlés étant lavé par un courant d'une solution aqueuse (23) d'un solvant désodorisant, de manière à engendrer de la vapeur saturée à partir de ce courant de solvant, des moyens électriques de précipitation (20) du type par voie humide destinés à collecter les particles de poussières résiduelles et la vapeur d'eau saturée et le brouillard d'huile fixé à cette vapeur d'eau saturée at aux gouttelettes de liquide du courant de gaz rûles caractérisée par des moyens d'introduction (32, 33) pour envoyer de l'eau résiduaire (23a) contenant des substances malodorantes et provenant des moyens de lavage du gaz (19), et des eaux usées (30a) provenant d'un dispositif de précipitation et contenant du brouillard d'huile collecté par les moyens électriques de précipitation (20) du types par voie humide, dans le courant de gaz brûlés (2) provenant du four électrique d'aciérie, sous la commande d'un dispositif de réglage du niveau (35) d'une cuve d'ajustement du débit (21).

2. Installation de purification des gaz brûlés après préchauffage des ferrailles d'aciérie, suivant la revendication 1, dans laquelle; les moyens d'introduction envoient l'eau résiduaire (23A) et les eaux usées (30A) du dispositif de précipitation aux moyens de combustion (3).

3. Installation de purification des gaz brûlés après préchauffage des ferrailles d'aciérie, suivant la revendication 1, dans laquelle: les moyens d'introduction envoient l'eau résiduaire (23A) et les eaux usées du dispositif de précipitation (30A) à un conduit pour les gaz brûlés (7), dans lequel du gaz (2) du four électrique d'aciérie est aspiré.

4. Installation de purification des gaz brûlés après préchauffage des ferrailles d'aciérie, suivant la revendication 1, dans laquelle les moyens d'introduction comprennent: une cuve d'ajustement du débit (21), destinée à ajuster l'alimentation totale en eaux résiduaires (23A) et en eaux usées (30A) du dispositif de précipitation

5. Installation de purification des gaz brûlés après préchauffage des ferrailles d'aciérie, suivant la revendication 1, dans laquelle les moyens d'introduction comprennent: un dispositif de projection (40) pour projeter directement l'eau résiduaire (23A) et les eaux usées (30A) du dispositif de précipitation dans le gaz du for électrique d'aciérie.

F I G. 1

EP 0 256 138 B1

F  I  G.  2

F I G. 3